# EUROPÄISCHE PATENTSCHRIFT

(11) **EP 0 623 868 B1**
(45) Veröffentlichungstag und Bekanntmachung des Hinweises auf die Patenterteilung: **20.08.2003**
(21) Anmeldenummer: 94106700.1
(22) Anmeldetag: 28.04.1994
(51) Int. Cl.: G06F 1/24, G06F 1/28

(54) **Schaltungsanordnung zur Überwachung der Versorgungsspannung einer Prozessoreinheit**
Circuit for monitoring the supply voltage of a processor
Circuit de surveillance d'un tension d'alimentation d'un processeur

(30) Priorität: 03.05.1993 DE 4314533
(43) Veröffentlichungstag der Anmeldung: 09.11.1994
(73) Patentinhaber: Infineon Technologies AG, 81669 München (DE)
(72) Erfinder: Brückmann, Dieter, Dr.-Ing., D-40670 Meerbusch (DE); Boom, Johannes Van den, Dipl.-Ing., D-40429 Düsseldorf (DE)
(74) Vertreter: Graf Lambsdorff, Matthias, Dr.

(56) Entgegenhaltungen:
- EP-A- 0 300 440
- DE-A- 3 515 611
- DE-A- 3 734 088
- FR-A- 2 638 867

## Beschreibung

Die Erfindung betrifft eine Schaltungsanordnung zur Überwachung der Versorgungsspannung einer durch einen Oszillator getakteten, eine Mindestversorgungsspannung erfordernen Prozessoreinheit.

Eine derartige Schaltungsanordnung ist beispielsweise in dem integrierten Schaltkreis ICL 7665 von Intersil realisiert. Einzelheiten zu diesem Schaltkreis sind beispielsweise dem Intersil Datenbuch, Component Data Catalog 1986, auf Seiten 5-39 bis 5-46 zu entnehmen. Bei dem genannten Schaltkreis handelt es sich im wesentlichen um einen Komparator mit geringer stromaufnahme, was für batteriebetriebene Anwendungen von großem Vorteil ist. Der Komparator vergleicht die Versorgungsspannung einer Prozessoreinheit mit einer Referenzspannung und bringt den Mikroprozessor bei einem Abfall der Versorgungsspannung unter die Referenzspannung in einen definierten Rücksetzzustand. Bei bestimmten Betriebsfallen kann jedoch die Prozessoreinheit in undefinierte Zustände geraten, die zu hohen Querströmen führen. Dadurch wird die Batterie unnötigerweise entladen und die Prozessoreinheit gefährdet. Ein derart problematischer Betriebsfall ist beispielsweise dadurch gegeben, daß bei einer zu niedrigen Versorgungsspannung der Versuch unternommen wird, die Prozessoreinheit zu aktivieren. Auch die Aktivierung der Prozessoreinheit bei einer Versorgungsspannung oberhalb ihrer Mindestversorgungsspannung kann Störungen hervorrufen, wenn durch das Einschalten und der damit verbundenen höheren Stromaufnahme die Versorgungsspannung wieder unter die Mindestversorgungsspannung absinkt. Bei batteriebetriebenen Anwendungen kann darüber hinaus ein Batteriewechsel, bei dem entweder geladene oder ungeladene Batterien eingelegt werden, derart undefinierte Zustände hervorrufen. Schließlich sind unzulässige Betriebsfälle auch darin begründet, daß beim Ansteigen der Versorgungsspannung über die Mindestversorgungsspannung die Prozessoreinheit während der Anlaufphase des Oszillators noch nicht bestimmungsgemäß arbeitet.

Aufgabe der Erfindung ist es daher, eine Schaltungsanordnung zur Überwachung der Versorgungsspannung einer durch einen Oszillator getakteten, eine Mindestversorgungsspannung erfordernden Prozessoreinheit anzugeben, bei der die vorstehend genannten Betriebsfälle zu keinen unzulässigen Betriebszuständen führen.

Die Aufgabe wird bei einer Schaltungsanordnung der eingangs genannten Art dadurch gelöst, daß ein Unterspannungsdetektor bei einer Versorgungsspannung im Bereich zwischen einem niedrigen ersten Grenzwert und einem darüber, jedoch unterhalb der Mindestversorgungsspannung liegenden zweiten Grenzwert in Betrieb ist und dabei ein Rücksetzsignal erzeugt, daß bei einer Versorgungsspannung über dem zweiten Grenzwert ein Komparator in Betrieb ist, der bei einer Versorgungsspannung über einen, oberhalb der Mindestversorgungsspannung liegenden dritten Grenzwert ein Aktivierungssignal erzeugt, und daß der Oszillator bei einer Versorgungsspannung über den zweiten Grenzwert und die Mikroprozessoreinheit bei Auftreten des Aktivierungssignals in Betrieb ist.

Neben einer hohen Betriebssicherheit zeichnet sich die erfindungsgemäße Schaltungsanordnung vor allem durch einen geringen Stromverbrauch aus, was vor allem für batteriebetriebene Anwendungen von Vorteil ist. Außerdem wird aufgrund der hohen Betriebssicherheit eine Speisung direkt aus einer Batterie ohne Zwischenschalten eines Spannungsreglers ermöglicht.

Eine bevorzugte Weiterbildung der Erfindung sieht vor, daß der Komparator bei einer Versorgungsspannung über dem zweiten Grenzwert nur dann in Betrieb ist, wenn ein zusätzliches Freigabesignal auftritt.

Weiterhin kann vorgesehen werden, daß ein durch den Unterspannungsdetektor rücksetzbares erstes Speicherelement bei Auftreten eines extern zugeführten Anlaufsignals den Ausgangszustand des Komparators übernimmt und daß ein ODER-Gatter aus dem Anlaufsignal und dem jeweiligen Ausgangszustand des ersten Speicherelements das Freigabesignal bildet.

Bei einer weiteren Ausgestaltung weist der Oszillator einen Schalteingang auf, dem ein durch den Unterspannungsdetektor rücksetzbares und durch das gesetzte erste Speicherelement setzbares zweites Speicherelement vorgeschaltet ist, wobei im gesetzten Zustand des zweiten Speicherelementes der Oszillator eingeschaltet ist.

Dabei kann vorgesehen werden, daß erstes und zweites Speicherelement zusätzlich durch ein extern zugeführtes Rücksetzsignal rücksetzbar sind.

Bevorzugt werden bei Auftreten des Rücksetzsignals und/oder des extern zugeführten Rücksetzsignals alle Anschlüsse der Prozessoreinheit in einen definierten, beispielsweise hochohmigen Zustand geschaltet.

Die Prozessoreinheit hat dabei die Erfindung weiterbildend, auf den Inhalt von erstem und/oder zweiten Speicherelement Zugriff.

Schließlich ist bei einer Weiterbildung der Erfindung die Prozessoreinheit mit einem Analog-Digial-Umsetzer verbunden, mittels dessen sie die Versorgungsspannung bei Werten über der Mindestversorgungsspannung überwacht und bei einer Versorgungsspannung über einem vierten Grenzwert, der größer oder gleich dem dritten Grenzwert ist, das erste Speicherelement rücksetzt, das zweite Speicherelement setzt sowie bei einem nachfolgenden Abfall der Versorgungsspannung unter den vierten Grenzwert das erste Speicherelement wiederum setzt.

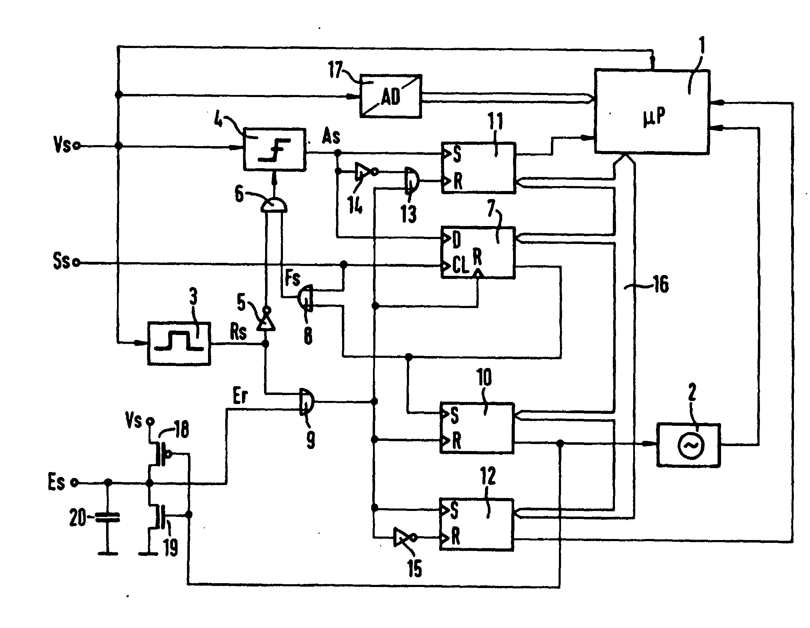

Die Erfindung wird nachfolgend anhand des in der einzigen Figur der Zeichnung dargestellten Ausführungsbeispiels näher erläutert.

Bei der als Ausführungsbeispiel gezeigten Schaltungsanordnung ist eine Prozessoreinheit 1 vorgesehen, zu deren ordnungsgemäßen Betrieb eine bestimmte Mindestversorgungsspannung erforderlich ist. Die Prozessoreinheit 1 wird mit einer Versorgungsspannung Vs versorgt, die beispielsweise durch nicht näher bezeichnete Batterien erzeugt wird und die zwischen Null und einem Maximalwert liegen kann. Die Prozessoreinheit 1 wird zudem durch einen Oszillator 2 getaktet, der wiederum einen Schalteingang aufweist, über den er ein- bzw. ausgeschaltet werden kann. Erfindungsgemäß ist ein Unterspannungsdetektor 3 vorgesehen, der bei einer Versorgungsspannung Vs im Bereich zwischen einem ersten Grenzwert und einem darüber, jedoch unterhalb der Mindestversorgungsspannung der Prozessoreinheit 1 liegenden zweiten Grenzwert in Betrieb ist und während des Betriebs fortlaufend ein Rücksetzsignal erzeugt. Der erste Grenzwert wird dabei möglichst niedrig gewählt und wird hauptsächlich durch Diodenschwellen und Einsatzspannungen der beim Unterspannungsdetektor 3 verwendeten Transistoren nach unten hin begrenzt. Bei einer Versorgungsspannung Vs oberhalb des zweiten Grenzwertes ist der Unterspannungsdetektor 3 wiederum außer Betrieb gesetzt. Dies kann beispielsweise dadurch erfolgen, daß entsprechend beschaltete Transistoren oberhalb des zweiten Grenzwertes gesperrt werden und dabei die Stromversorgung des Unterspannungsdetektors 3 unterbrechen. Während des Betriebs des Unterspannungsdetektors 3 gibt dieser das Rücksetzsignal Rs ab, das zum Beispiel durch einen dem logischen Zustand 1 entsprechenden Spannungspegel gebildet wird.

Zudem enthält die gezeigte Schaltungsanordnung einen Komparator 4, der bei einer Versorgungsspannung über den zweiten Grenzwert in Betrieb ist. Dies wird beispielsweise dadurch erreicht, daß der Komparator bei Ausbleiben des Rücksetzsignals Rs eingeschaltet wird. Dabei sind zwei Fälle zu unterscheiden, nämlich daß die Versorgungsspannung Vs unter dem ersten Grenzwert oder über dem zweiten Grenzwert liegt. Da der eine Fall sehr niedrige Versorgungsspannungen betrifft, ist ein Betrieb des Komparators ohnehin nicht möglich. Im anderen Fall kann dann durch das invertierte Rücksetzsignal Rs der Komparator 4 eingeschaltet werden. Der Komparator 4 überwacht die Versorgungsspannung Vs und gibt bei einem Wert über einem, oberhalb der Mindestversorgungsspannung liegenden dritten Grenzwert ein Aktivierungssignal As ab. Zusammen mit dem Komparator 4 wird in gleicher Weise bei Ausbleiben des Rücksetzsignals Rs der Oszillator 2 eingeschaltet. Dagegen wird erst bei Auftreten des Aktivierungssignals As die Prozessoreinheit 1 aktiviert.

In Weiterbildung der Erfindung ist vorgesehen, daß der Komparator bei einer Versorgungsspannung Vs über dem zweiten Grenzwert nur dann eingeschaltet ist, wenn ein zusätzliches Freigabesignal Fs auftritt. Dazu wird das Freigabesignal Fs mit dem durch einen Inverter 5 invertierten Rücksetzsignal Rs mittels eines UND-Gatters 6 verknüpft und dem Schalteingang des Komparators 4 zugeführt. Das Freigabesignal Fs wiederum geht aus der Verknüpfung eines Anlaufsignals Ss und dem Ausgangssignal eines Speicherelements 7 hervor. Zur Verknüpfung beider Signale ist ein ODER-Gatter 8 vorgesehen. Bei dem Speicherelement 7 handelt es sich um ein getaktetes D-Flip-Flop mit Rücksetzeingang. Der Dateneingang D ist dabei mit dem Ausgang des Komparators 4 verbunden und der Takteingang CL ist mit dem Anlaufsignal Ss beaufschlagt. Desweiteren ist der Rücksetzeingang Rs an den Ausgang eines ODER-Gatters 9 angeschlossen. Das ODER-Gatter 9 verknüpft das Rücksetzsignal Rs am Ausgang des Unterspannungsdetektors 3 mit einem extern zugeführten Rücksetzsignal Er.
Ein weiteres Speicherelement 10 ist dem Schalteingang des Oszillators 2 vorgeschaltet. Es handelt sich dabei um ein RS-Flip-Flop, dessen Rücksetzeingang R mit dem Ausgang des ODER-Gatters 9 und dessen Setzeingang S mit dem Ausgang des Speicherelements 7 verbunden ist. Im gesetzten Zustand des Speicherelements 10 ist der Oszillator 2 eingeschaltet und im rückgesetzten Zustand ausgeschaltet.

Schließlich sind zwei weitere Speicherelemente 11 und 12 vorgesehen, nämlich zwei RS-Flip-Flops. Der Setzeingang S des Speicherelements 11 ist an den Ausgang des Komparators 4 und der Rücksetzeingang R an den Ausgang eines ODER-Gatters 13 angeschlossen. Das ODER-Gatter 13 ist zum einen mit dem Ausgang des ODER-Gatters 9 und unter Zwischenschaltung eines Inverters 14 mit dem Ausgang des Komparators 4 gekoppelt. Beim Speicherelement 12 ist der Setzeingang S direkt und der Rücksetzeingang R unter Zwischenschaltung eines Inverters 15 mit dem Ausgang des ODER-Gatters 9 verbunden. Die Ausgänge der Speicherelemente 11 und 12 sind mit der Prozessoreinheit 1 gekoppelt. Bei gesetztem Speicherelement 11 wird der Prozessoreinheit 11 signalisiert, daß die Versorgungsspannung Vs ausreichend ist und die Prozessoreinheit 1 den Betrieb aufnehmen kann. Im rückgesetzten Zustand des Speicherelementes 12 werden sämtliche nach außen führenden Anschlüsse der Prozessoreinheit 1 in einen hochohmigen Zustand geschaltet, um unkontrollierte Querströme zwischen einzelnen Anschlüssen zu vermeiden. Der hochohmige Zustand an den Anschlüssen ist mit dem entsprechenden Zustand bei Tristate-Ausgängen vergleichbar. Schließlich hat die Prozessoreinheit 1 beispielsweise über einen Bus 16 selektiv Zugriff auf die Speicherelemente 7, 10, 11, 12. Unter Programmsteuerung kann damit die Prozessoreinheit 1 die einzelnen Speicherelemente setzen oder rücksetzen sowie deren jeweiligen Inhalt auslesen.

In Weiterbildung der Erfindung ist die Prozessoreinheit 1 zudem mit einem Analog-Digital-Umsetzer 17 verbunden, mittels dessen die Versorgungsspannung Vs überwacht wird, wobei die Prozessoreinheit 1 unter Programmsteuerung bei einer Versorgungsspannung Vs oberhalb eines vierten Grenzwertes, der größer oder gleich dem dritten Grenzwert ist, das Speicherelement 7 rücksetzt, das Speicherelement 11 setzt sowie bei einem nachfolgenden Abfall der Versorgungsspannung Vs unter den vierten Grenzwert das Speicherelement 7 wiederum setzt.

Bei sämtlichen Speicherelementen 7, 10, 11, 12 handelt es sich um flankengetriggerte Flip-Flops, die jedoch ohne weiteres durch statische Flip-Flops bei entsprechender Ausbildung des jeweiligen Ansteuersignales ersetzt werden können.

Sobald die Versorgungsspannung Vs den ersten Grenzwert überschreitet, wird der Unterspannungsdetektor 3 aktiviert, der das Rücksetzsignal Rs erzeugt. Durch dieses Rücksetzsignal Rs werden alle Speicherelemente 7, 10, 11, 12 in den rückgesetzten Zustand gebracht. Bei rückgesetztem Speicherelement 12 sind alle Anschlüsse in einen definierten, beispielsweise hochohmigen Zustand geschaltet. Bei rückgesetztem Speicherelement 10 ist der Oszillator 2 abgeschaltet. Das rückgesetzte Speicherelement 11 signalisiert der Prozessoreinheit 1, daß sich die Versorgungsspannung in einem nicht zulässigen Bereich, nämlich unterhalb der erforderlichen Mindestversorgungsspannung befindet. Das rückgesetzte Speicherelement 7 schließlich unterbindet die Aktivierung des Komparators 4. Die Prozessoreinheit 1 wird also zum frühest möglichen Zeitpunkt, nämlich bei Erreichen des ersten Grenzwertes, in einen definierten Zustand gebracht, so daß der Stromverbrauch minimal ist.

Der Unterspannungsdetektor 3 ist ab dem ersten Grenzwert wirksam und wird bei Erreichen des zweiten Grenzwertes abgeschaltet. Daraufhin wird der Komparator 4 aktiviert, der wesentlich genauer ist als die Unterspannungserkennung. Die genauere Grenzwerterkennung benötigt allerdings einen größeren Strom, da im wesentlichen ein direkter Zusammenhang zwischen Genauigkeit und Stromverbrauch besteht. Zur Minimierung des Stromverbrauchs der gesamten Anordnung wird daher der Komparator 4 erst beim Versuch die Prozessoreinheit 1 zu aktivieren, eingeschaltet. Die Aktivierung der Prozessoreinheit 1 wird durch das Signal Ss angezeigt, das beispielsweise aus der Betätigung einer Taste abgeleitet wird. Die Signalisierung, ob der dritte Grenzwert überschritten ist oder nicht, die Versorgungsspannung Vs also im zulässigen oder unzulässigen Bereich ist, erfolgt durch Setzen des Speicherelemtes 11. Der gesetzte Zustand des Speicherelements 11 sowie aller anderen Speicherelemente 7, 10, 12 kann von der Prozessoreinheit 1 als sogenanntes Flag gelesen werden. Ist die Versorgungsspannung Vs im zulässigen Bereich, wird das Flag gesetzt und zeigt damit der Prozessoreinheit 1 an, daß diese den Betrieb aufnehmen kann. Ist die Versorgungsspannung Vs im zulässigen Bereich und wird gleichzeitig das Anlaufsignal Ss erzeugt, so wird auch das Speicherelement 7 gesetzt. Mit dem Setzen des Speicherelements 7 wiederum wird das Speicherelement 10 gesetzt, das den Oszillator 2 in Betrieb gehen läßt und den Komparator 4 dauerhaft aktiviert. Fällt die Versorgungsspannung Vs durch den Hochlauf der gesamten Anordnung und des damit verbundenen größeren Stromverbrauchs wieder unter den dritten Grenzwert ab, so wird das Speicherelement 11 durch den Komparator 4 wieder rückgesetzt. Durch Abfrage dieses Flags kann die Prozessoreinheit 1 dann feststellen, daß die Versorgungsspannung Vs im unzulässigen Bereich ist und ein definiertes Abschalten einleiten. Bleibt jedoch die Prozessoreinheit 1 aktiviert, so kann im folgenden der Analog-Digital-Umsetzer 17 zur Überwachung der Versorgungsspannung Vs eingesetzt werden. Zur Minimierung des Stromverbrauchs kann daher der Komparator 4 unter Programmsteuerung durch die Prozessoreinheit 1 wiederum abgeschaltet werden, indem er das Speicherelement 7 zurücksetzt. Dabei wird allerdings auch das Speicherelement 11 rückgesetzt, das dann entweder durch die Prozessoreinheit 1 ignoriert oder gesetzt wird. Bei Abfall der Versorgungsspannung unter den vierten Grenzwert wird von der Prozessoreinheit 1 durch Setzen des Speicherelementes 7 der Komparator 4 wieder in Betrieb genommen und die Versorgungsspannungsüberwachung erfolgt wiederum durch den Komparator 4 bzw. bei niedriger Versorgungsspannung Vs durch den Unterspannungsdetektor 3.

Als zusätzliche Sicherheit im unzulässigen Versorgungsspannugsbereich und um ein definiertes Anlaufen der Prozessoreinheit 1 sicherzustellen, ist eine zusätzliche Resetzelle vorgesehen. Diese besteht im wesentlichen aus einem p-Kanalund einem n-Kanal-Feldeffekttransistor 18 bzw. 19. Ist der Oszillator 2 abgeschaltet, d.h. das Speicherelement 12 rückgesetzt, ist der Transistor 19 durchgeschaltet, wodurch wiederum der externe Reseteingang Es aktiviert ist, so daß durch den abgeschalteten Oszillator 2 permanent ein externes Rücksetzsignal Er generiert wird. Wird der Oszillator 2 in Betrieb genommen, so sperrt der Transistor 19 und der Transistor 18 öffnet, so daß ein Kondensator 20, und damit das Potential am Rücksetzeingang Es mit einer bestimmten Zeitkonstanten bis auf den Wert der Versorgungsspannung Vs ansteigt. Dadurch wird das externe Rücksetzsignal Er erst zurückgenommen, nachdem der Oszillator 2 eine gewisse Zeit zum Einschwingen zur Verfügung hatte.

## Patentansprüche

1. Schaltungsanordnung zur Überwachung der Versorgungsspannung (Vs) einer durch einen Oszillator (2) getakteten, eine Mindestversorgungsspannung erfordernden Prozessoreinheit (1),
**dadurch gekennzeichnet,**
**daß** ein Unterspannungsdetektor (3) bei einer Versorgungsspannung (Vs) im Bereich zwischen einem niedrigen ersten Grenzwert und einem darüber, jedoch unterhalb der Mindestversorgungsspannung liegenden zweiten Grenzwert in Betrieb ist und dabei ein Rücksetzsignal (Rs) erzeugt,
**daß** bei einer Versorgungsspannung (Vs) über dem zweiten Grenzwert ein Komparator (4) in Betrieb ist, der bei einer Versorgungsspannung (Vs) über einem, oberhalb der Mindestversorgungsspannung liegenden dritten Grenzwert ein Aktivierungssignal (As) erzeugt, und daß der Oszillator (2) bei einer Versorgungsspannung (Vs) über dem zweiten Grenzwert und die Prozessoreinheit (1) bei Auftreten des Aktivierungssignals (As) in Betrieb ist.

2. Schaltungsanordnung nach Anspruch 1,
**dadurch gekennzeichnet,**
**daß** der Komparator (2) bei einer Versorgungsspannung (Vs) über dem zweiten Grenzwert nur dann in Betrieb ist, wenn ein zusätzliches Freigabesignal (Fs) auftritt.

3. Schaltungsanordnung nach Anspruch 2,
**dadurch gekennzeichnet, daß** ein durch den Unterspannungsdetektor (3) rücksetzbares erstes Speicherelement (7) bei Auftreten eines extern zugeführten Anlaufsignals (Ss) den Ausgangszustand des Komparators (4) übernimmt und daß ein ODER-Gatter (8) aus dem Anlaufsignal (As) und dem jeweiligen Ausgangszustand des ersten Speicherelements (7) das Freigabesignal (Fs) bildet.

4. Schaltungsanordnung nach Anspruch 3,
**dadurch gekennzeichnet,**
**daß** der Oszillator (2) einen Schalteingang aufweist, dem ein durch den Unterspannungsdetektor (3) rücksetzbares und durch das gesetzte erste Speicherelement (7) setzbares zweites Speicherelement (10) vorgeschaltet ist, und daß im gesetzten Zustand des zweiten Speicherelements (10) der Oszillator (2) eingeschaltet ist.

5. Schaltungsanordnung nach Anspruch 3 oder 4,
**dadurch gekennzeichnet,**
**daß** erstes und/oder zweites Speicherelement (7, 10) zusätzlich durch ein extern zugeführtes Rücksetzsignal (Er) rücksetzbar sind.

6. Schaltungsanordnung nach einem der Ansprüche 1 bis 5,
**dadurch gekennzeichnet,**
**daß** bei Auftreten des Rücksetzsignals (Rs) und/oder des extern zugeführten Rücksetzsignals (Rs) alle Anschlüsse der Prozessoreinheit (1) in einen definierten Zustand geschaltet werden.

7. Schaltungsanordnung nach einem der Ansprüche 3 bis 6,
**dadurch gekennzeichnet,**
**daß** die Prozessoreinheit (1) auf den Inhalt von erstem und/oder zweitem Speicherelement (7, 10) Zugriff hat.

8. Schaltungsanordnung nach Anspruch 7,
**dadurch gekennzeichnet,**
**daß** die Prozessoreinheit (1) bei einer Versorgungsspannung (Vs) über der Mindestversorgungsspannung mittels eines Analog-Digital-Umsetzers (17) die Versorgungsspannung (Vs) selbst überwacht und bei einer Versorgungsspannung (Vs) über einem vierten Grenzwert, der größer oder gleich dem dritten Grenzwert ist, das erste Speicherelement (7) rücksetzt, das zweite Speicherelement (10) setzt sowie bei einem nachfolgenden Abfall der Versorgungsspannung (Vs) unter den vierten Grenzwert das erste Speicherelement (7) wieder setzt.

9. Schaltungsanordnung nach einem der Ansprüche 1 bis 8,
**dadurch gekennzeichnet,**
**daß** Mittel (18, 19, 20) vorgesehen sind, die bei abgeschaltetem Oszillator (2) permanent das externe Rücksetzsignal (Er) erzeugen und die nach dem Einschalten des Oszillators (2) zeitverzögert das externe Rücksetzsignal (Er) zurücknehmen.

## Claims

1. Circuit arrangement for monitoring the supply voltage (Vs) of a processor unit (1), which is clocked by an oscillator (2) and requires a minimum supply voltage,
**characterized**
**in that**, in the event of a supply voltage (Vs) in the range between a low first limit value and a second limit value, which lies above the latter but below the minimum supply voltage, an undervoltage detector (3) is in operation and generates a reset signal (Rs) in this case,
**in that**, in the event of a supply voltage (Vs) above the second limit value, a comparator (4) is in operation, which, in the event of a supply voltage (Vs) above a third limit value, which lies above the minimum supply voltage, generates an activation signal (As), and in that the oscillator (2) is in operation in the event of a supply voltage (Vs) above the second limit value and the processor unit (1) is in operation in the event of the occurrence of the activation signal (As).

2. Circuit arrangement according to Claim 1,
**characterized**
**in that**, in the event of a supply voltage (Vs) above the second limit value, the comparator (2) is in operation only when an additional enable signal (Fs) occurs.

3. Circuit arrangement according to Claim 2,
**characterized**
**in that**, in the event of the occurrence of a start signal (Ss) fed in externally, a first storage element (7), which can be reset by the undervoltage detector (3), accepts the output state of the comparator (4), and in that an OR gate (8) forms the enable signal (Fs) from the start signal (As) and the respective output state of the first storage element (7).

4. Circuit arrangement according to Claim 3,
**characterized**
**in that** the oscillator (2) has a switching input, upstream of which is connected a second storage element (10), which can be reset by the undervoltage detector (3) and can be set by the set first storage element (7), and in that the oscillator (2) is switched on in the set state of the second storage element (10).

5. Circuit arrangement according to Claim 3 or 4,
**characterized**
**in that** first and/or second storage element (7, 10) can additionally be reset by a reset signal (Er) fed in externally.

6. Circuit arrangement according to one of Claims 1 to 5,
**characterized**
**in that**, in the event of the occurrence of the reset signal (Rs) and/or of the reset signal (Rs) fed in externally, all the terminals of the processor unit (1) are switched into a defined state.

7. Circuit arrangement according to one of Claims 3 to 6,
**characterized**
**in that** the processor unit (1) has access to the content of first and/or second storage element (7, 10).

8. Circuit arrangement according to Claim 7,
**characterized**
**in that** the processor unit (1), in the event of a supply voltage (Vs) above the minimum supply voltage, monitors the supply voltage (Vs) itself by means of an analogue-to-digital converter (17) and, in the event of a supply voltage (Vs) above a fourth limit value, which is greater than or equal to the third limit value, resets the first storage element (7), sets the second storage element (10) and, in the event of a subsequent fall in the supply voltage (Vs) below the fourth limit value, sets the first storage element (7) again.

9. Circuit arrangement according to one of Claims 1 to 8,
**characterized**
**in that** means (18, 19, 20) are provided, which permanently generate the external reset signal (Er) with oscillator (2) switched off and which withdraw the external reset signal (Er) in a time-delayed manner after the switch-on of the oscillator (2).

## Revendications

1. Circuit de surveillance de la tension (Vs) d'alimentation d'une unité (1) de processeur cadencée par un oscillateur (2) et exigeant un minimum de tension d'alimentation,
**caractérisé**
**en ce qu'**un détecteur (3) de sous-tension est en fonctionnement pour une tension (Vs) d'alimentation dans l'intervalle compris entre une première valeur limite basse et une deuxième valeur limite qui lui est supérieure mais qui est inférieure au minimum de tension d'alimentation et produit un signal (Rs) de remise à l'état initial,
**en ce que**, pour une tension (Vs) d'alimentation supérieure à la deuxième valeur limite, un comparateur (4) est en fonctionnement et produit un signal (As) d'activation pour une tension (Vs) d'alimentation supérieure à une troisième valeur limite se trouvant au-dessus du minimum de la tension d'alimentation, et en ce que l'oscillateur (2) est en fonctionnement pour une tension (Vs) d'alimentation supérieure à la deuxième valeur limite et l'unité (1) de processeur est en fonctionnement lorsqu'apparaît le signal (As) d'activation.

2. Circuit suivant la revendication 1, **caractérisé en ce que** le comparateur (2) n'est en fonctionnement pour une tension (Vs) d'alimentation supérieure à la deuxième valeur limite que lorsqu'il se produit un signal (Fs) supplémentaire de validation.

3. Circuit suivant la revendication 2, **caractérisé en ce qu'**un premier élément (7) de mémoire pouvant être remis à l'état initial par le détecteur (3) de sous-tension prend en charge lorsqu'il se produit un signal (Ss) de démarrage venant de l'extérieur l'état initial du comparateur (4) et **en ce qu'**une porte (8) OU forme le signal (Fs) de validation à partir du signal (As) de démarrage et de l'état initial respectif du premier élément (7) de mémoire.

4. Circuit suivant la revendication 3, **caractérisé en ce que** l'oscillateur (2) comporte une entrée de commutation en aval de laquelle est monté un deuxième élément (10) de mémoire pouvant être mis à l'état initial par le détecteur (3) de sous-tension et qui peut être activé par le premier élément (7) de mémoire activé et **en ce que**, lorsque le deuxième élément (10) de mémoire est à l'état activé, l'oscillateur (2) est connecté.

5. Circuit suivant la revendication 3 ou 4, **caractérisé en ce que** le premier et/ou le deuxième élément (7, 10) de mémoire peuvent être remis à l'état initial, en outre, par un signal (Er) de remise à l'état initial venant de l'extérieur.

6. Circuit suivant l'une des revendications 1 à 5, **caractérisé en ce que**, lorsque le signal (Rs) de remise à l'état initial venant de l'extérieur se produit, toutes les bornes de l'unité (1) de processeur sont connectées dans un état défini.

7. Circuit suivant l'une des revendications 3 à 6, **caractérisé en ce que** l'unité (1) de processeur a accès au contenu du premier et/ou du deuxième élément (7, 10) de mémoire.

8. Circuit suivant la revendication 7, **caractérisé en ce que** l'unité (1) de processeur surveille la tension (Vs) d'alimentation, elle-même, lors d'une alimentation (Vs) en tension au-dessus du minimum de tension d'alimentation au moyen d'un convertisseur (17) analogique numérique et, lorsque la tension (Vs) d'alimentation dépasse une quatrième valeur limite qui est supérieure ou égale à la troisième valeur limite, remet à l'état initial le premier élément (7) de mémoire, active le deuxième élément (10) de mémoire, ainsi que réactive, lors d'une chute venant ensuite la tension (Vs) d'alimentation en dessous de la quatrième valeur limite, le premier élément (7) de mémoire.

9. Circuit suivant l'une des revendications 1 à 8, **caractérisé en ce qu'**il est prévu des moyens (18, 19, 20) qui, lorsque l'oscillateur (2) n'est pas en circuit, relient de manière permanente le signal (Er) extérieur de remise à l'état initial et qui reprennent après la mise en circuit de l'oscillateur (2) avec un retard dans le temps le signal (Er) extérieur de remise à l'état initial.
